# EUROPEAN PATENT APPLICATION

(11) **EP 4 628 532 A1**
(43) Date of publication of application: **08.10.2025**
(21) Application number: 23898178.1
(22) Date of filing: 21.11.2023
(51) Int. Cl.: C08L 23/10, C08K 5/00, C08J 3/28

(54) **POLYPROPYLENE RESIN COMPOSITION HAVING EXCELLENT MELT STRENGTH AND METHOD FOR PREPARING SAME**

(30) Priority: 30.11.2022 KR 20220165270
(71) Applicant: Lotte Chemical Corporation, Seoul 05551 (KR)
(72) Inventor: JUNG, Jae-Hoon, Daejeon 34110 (KR); LIM, Jisu, Daejeon 34110 (KR); SON, Chang Kyu, Daejeon 34110 (KR)
(74) Representative: Germain Maureau
(86) International application number: PCT/KR2023/018821
(87) International publication number: WO 2024/117647

(57) **Abstract**

Disclosed are a polypropylene resin composition having a high extensional viscosity and a high melt strength and a method for preparing the same. The present invention provides a polypropylene resin composition and a method for preparing the same, the polypropylene resin composition having a weight average molecular weight of 250,000 to 500,000 g/mol, a molecular weight distribution (MWD, Mw/Mn) of 5.5 to 12, and a content of a polymer having a molecular weight of 1,000,000 g/mol or more of 4 to 15% by weight.

## Description

### TECHNICAL FIELD

### Cross-reference to Related Applications

This application claims the benefit of Korean Patent Application No. 10-2022-0165270, filed on November 21, 2023, in the Korean Intellectual Property Office, the disclosure of which is incorporated herein in its entirety by reference.

### Technical Field

The present invention relates to a polypropylene resin composition and a method for preparing the same and more specifically, the present invention relates to a polypropylene resin composition having an excellent melt strength and a method for preparing the same.

### BACKGROUND ART

Polypropylene is widely used for general purpose products due to its excellent mechanical characteristics, low specific gravity, and easy moldability, and recently, it is also used in various fields of products that require high performance due to the improvement of mechanical physical properties.

However, the polypropylene in the general form has a linear polymer, and thus it has a limitation of low melting strength. Due to such a limitation, polypropylene has been limitedly used as a material for sheet foaming, as well as a product of deep-draw compression molding and a large blow product which should have a high extensional viscosity.

Various methods have been disclosed to increase the melting tension of polypropylene; however, most of them are methods of reforming a linear polypropylene by introducing a long chain branch through reaction extrusion after adding a peroxide, and they may cause such a problem that propylene is decomposed due to the peroxide during the reaction extrusion process and have problems such as peroxide retention and yellowing.

Korean Patent Registration No. 0311290 is a method of preparing a propylene polymer material having a high melt strength by irradiating polypropylene having an electron beam, where after the polymerization of linear polypropylene polymerization, the linear polypropylene polymerization was irradiated with an electron beam and then pelleted in a radiation chamber in a nitrogen atmosphere to prepare a nonlinear propylene polymer. The foaming evaluation of the prepared polymer showed a good foaming ratio of up to eight times; however, there is a problem in that chlorofluorocarbon (CFC) gas, which is an ozone layer destructive substance currently banned internationally, was used as a foaming agent at a level of high content of 8%.

Korean Patent Registration No. 1938511 discloses a method of preparing a high-melting strength polypropylene through reaction extrusion by adding an organic peroxide to polypropylene; however, there is also such a problem that problems of peroxide retention and yellowing may occur.

Korean Patent Registration No. 2129922 discloses a high-fluidity and partial crosslinking type polypropylene having impact resistance, which has improved fluidity and improved impact resistance by using a specific crosslinking agent ; however, it is difficult to achieve the melting tension required for compression molding or foam molding.

### DISCLOSURE OF THE INVENTION

### TECHNICAL PROBLEM

The present invention aims to provide a polypropylene resin composition having a high extensional viscosity and a high melt strength and a method for preparing the same.

### TECHNICAL SOLUTION

To solve the above-described problems, the present invention provides a polypropylene resin composition, the polypropylene resin composition having a weight average molecular weight of 250,000 to 500,000 g/mol, a molecular weight distribution (MWD, Mw/Mn) of 5.5 to 12, and a content of a polymer having a molecular weight of 1,000,000 g/mol or more of 4 to 15% by weight.

In addition, the present invention provides the polypropylene resin composition, wherein the polypropylene resin composition is characterized in that a degree of branching is 0.5 to 0.8, an extensional viscosity is 5 × 10⁶ to 10⁹ Pa·s, and a melting strength is 30 cN or more, where the degree of branching, the extensional viscosity, and the melting strength are measured according to the following methods.

### [Method for measuring degree of branching]

The degree of branching is calculated as a ratio ([η]_{br}/[η]ₗᵢₙ) of an intrinsic viscosity ([η]ₗᵢₙ) of a linear polymer having the same molecular weight as an intrinsic viscosity ([η]_{br}] of the polypropylene resin composition.

### [Method for measuring extensional viscosity]

The extensional viscosity is measured as a resistance value applied when a specimen having a width of 20 mm, a length of 10 mm, and a thickness of 1 mm is fixed to a test piece holder using an advanced rheometric expansion system (ARES), and then the specimen rotates around an axis at a temperature of 180°C and a speed of 0.1/s using an extensional viscosity fixture (EVF) mode, where a maximum value of tensions that varies according to a rotation distance (elongation rate) of the specimen is defined as the extensional viscosity.

### [Method for measuring melt strength]

When a molten sample is extruded through a circular die having a diameter of 1 mm at 200°C by using a Rheotens device (Rheotens 97 (GOTTFERT), and a strand generated by the extrusion is located 100 mm (spinline length) below a die outlet and then is wound by a Rheotens wheel of which a winding speed gradually increases with an acceleration of 120 mm/s², a force (cN) applied to the wheel is recorded as a function of a winding speed (mm/s), and a force at a peak before the strand breaks or a force applied during breakage is defined as the melting strength.

In addition, the present invention provides the polypropylene resin composition, wherein the polypropylene resin composition is for compression molding, for blowing, or for foaming.

To solve other problems described above, the present invention provides a method for preparing a polypropylene resin composition, which is a method for preparing the polypropylene resin composition according to claim 1 by irradiating an electron beam to a resin composition to which 0.01 to 2 parts by weight of a crosslinking agent is added with respect to 100 parts by weight of polypropylene.

In addition, the present invention provides the method for preparing a polypropylene resin composition, wherein the crosslinking agent is one or more selected from the group consisting of triallyl isocyanurate, triallyl cyanurate, trimethylolpropane trimethacrylate, trimethylolpropane triacrylate, triallyl trimethacrylate, triallyl phosphate, pentaerythritol triacrylate and divinylbenzene.

In addition, the present invention provides the method for preparing a polypropylene resin composition, wherein an irradiation dose of the electron beam is 5 to 30 kGy.

### ADVANTAGEOUS EFFECTS

The present invention provides a polypropylene resin composition which is obtained by irradiating, with an electron beam, a resin composition to which a crosslinking agent is added to polypropylene, the polypropylene resin having a weight average molecular weight of 250,000 to 500,000 g/mol, a molecular weight distribution (MWD, Mw/Mn) of 5.5 to 12, and a content of a polymer having a molecular weight of 1,000,000 g/mol or more of 4 to 15% by weight, and thus may provide a polypropylene resin composition having an excellent extensional viscosity and an excellent melt strength and a method for preparing the same.

The polypropylene resin composition according to the present invention may be used for various applications such as extrusion, sheets, and injection, and may be more suitably used for compression molding, blowing, or foaming, which requires high melt strength characteristics.

### MODE FOR CARRYING OUT THE INVENTION

Hereinafter, preferred exemplary embodiments according to the present invention will be described in detail. In describing the present invention, in a case where it is determined that a detailed description of a related known technology may obscure the gist of the present invention, the detailed description thereof will be omitted. In the overall present specification, in a case where a certain part is said to "include" a certain component, it means that other components may be further included rather than excluding other components, unless the context specifically states otherwise.

The present invention discloses a polypropylene resin composition having a weight average molecular weight of 250,000 to 500,000 g/mol, a molecular weight distribution (MWD, Mw/Mn) of 5.5 to 12, and a content of a polymer having a molecular weight of 1,000,000 g/mol or more of 4 to 15% by weight. The polypropylene resin composition according to the present invention may be prepared by irradiating an electron beam to a resin composition to which 0.01 to 2 parts by weight of a crosslinking agent is added with respect to 100 parts by weight of polypropylene.

In the present invention, the polypropylene is not particularly limited as long as it is a resin for improving melt strength through electron beam irradiation; however, a propylene homopolymer, a propylene random copolymer, or an impact polypropylene (a block copolymer of a propylene homopolymer and an ethylene-propylene copolymer) may be used. In this case, the comonomer that is used in the preparation of the propylene copolymer is preferably ethylene or an α-olefin having 4 to 10 carbon atoms, and the content of the comonomer may be 30% by weight or less, and preferably 1% to 10% by weight. This polypropylene may be prepared by a generally known process, and a method for preparing the same is not particularly limited in the present invention.

In the present invention, the polypropylene which is irradiated with an electron beam and to which a crosslinking agent is added may have a weight average molecular weight of 250,000 to 500,000 g/mol and a molecular weight distribution (MWD, Mw/Mn) of 5.5 to 12, and may have preferably a weight average molecular weight of 270,000 to 450,000 g/mol and a molecular weight distribution (MWD, Mw/Mn) of 5.5 to 10. When the weight average molecular weight is less than 250,000 g/mol, due to the relatively low molecular weight, for example, foaming ratio is insufficient when applied for molding, or high flowability makes molding difficult during molding a sheet. When the weight average molecular weight exceeds 500,000 g/mol, the flowability is lowered and adversely affects molding. In addition, if the above-described molecular weight distribution is below 5.5, it is difficult to improve the number of branches to a certain level or more, and there are process limitations in setting the number of branches to exceed 12.

In the present invention, in order to achieve polypropylene having a weight average molecular weight and a molecular weight distribution within the above-described ranges, two kinds of polypropylene having adjusted molecular weight characteristics may be mixed and used, or a single polypropylene having a molecular weight in a specific range may be used.

Specifically, in a case where two kinds of polypropylene having adjusted molecular weight characteristics are mixed and used, 60% to 90% by weight of a high molecular weight-polypropylene having a weight average molecular weight of 500,000 to 700,000 g/mol and 10% to 40% by weight of a low molecular weight-polypropylene having a weight average molecular weight of 50,000 to 200,000 g/mol may be mixed, and preferably, 70% to 85% by weight of a high molecular weight-polypropylene having a weight average molecular weight of 550,000 to 650,000 g/mol and 15% to 30% by weight of a high molecular weight-polypropylene having a weight average molecular weight of 80,000 to 150,000 g/mol may be mixed.

In addition, in a case where a single polypropylene is used, a polypropylene having a weight average molecular weight of 350,000 g/mol to 600,000 g/mol may be used, and preferably, a polypropylene having a weight average molecular weight of 400,000 g/mol to 500,000 g/mol may be used.

In the present invention, a triolefin-based crosslinking agent or divinylbenzene may be used as the crosslinking agent, and triallyl isocyanurate, triallyl cyanurate, trimethylolpropane trimethacrylate, trimethylolpropane triacrylate, triallyl trimethacrylate, triallyl phosphate, pentaerythritol triacrylate and divinylbenzene, or the like may be used as the triolefin-based crosslinking agent. Here, it is desirable to select triallyl isocyanurate (TAIC) in consideration of achieving the maximized extensional viscosity and melt strength maximizing the crosslinking effect by introducing a long chain branch and by controlling the content of the crosslinking agent and the absorption amount of electron beams during electron beam irradiation.

In the present invention, the content of the crosslinking agent to be mixed may be 0.01 to 2 parts by weight with respect to 100 parts by weight of the polypropylene, the content thereof may be preferably 0.1 to 1.5 parts by weight and more preferably 0.5 to 1.2 parts by weight. In a case where the content of the crosslinking agent is less than 0.01 parts by weight, it is difficult to expect a satisfactory crosslinking effect. In a case where the content of the crosslinking agent is more than 2 parts by weight, the crosslinking effect of polypropylene increases, which makes it possible to introduce a large number of long chain branches; however, the excessive crosslinking effect may hinder, for example, cell growth during foaming, thereby rather reducing foaming performance and significantly increasing gel generation.

In the present invention, the mixing of the polypropylene and the crosslinking agent may be carried out in accordance with a conventional method known in the art. For example, required amounts of the above-described components are charged into a mixer and mixed and then subjected to melting and extrusion using an extruder under conditions of an extrusion temperature of 180 to 240°C and a screw rotation speed of 95 to 100 rpm, thereby being prepared in a pellet shape.

In the present invention, a mixture of the polypropylene and a crosslinking agent is subjected to electron beam irradiation in order to generate free radicals in polypropylene and in order to improve melting strength by generating inter-chain entanglement due to the introduction of cut chains into branches due to the cutting by the radicals.

In the present invention, the electron beam irradiation may be carried out using, for example, an electron beam accelerator having an irradiation amount of 10 MeV. In the present invention, it is possible to achieve chain entanglement sufficient for improving the desired melting strength even with a low-dose electron beam irradiation which allows an absorption amount of 5 to 30 kGy, preferably 10 to 25 kGy, and more preferably 15 to 20 kGy. In a case where the irradiation dose is less than 5 kGy, it may be difficult to impart a high extensional viscosity due to the small number of radicals generated, and in a case where the irradiation dose exceeds 30 kGy, the degree of degradation of the molecular chain may increase and the extensional viscosity may decrease.

The polypropylene resin composition according to the present invention may further contain, as another additive, one or more of conventional additives known in the art, for example, an antioxidant, a neutralizing agent, a heat-resistant stabilizer, and the like. In this case, the content of each of the additives may be used in a range of 0.01 to 1 part by weight with respect to 100 parts by weight of the polypropylene resin composition for foaming according to the present invention; however, it is not particularly limited thereto.

The antioxidant can prevent a resin molecule from being cut off due to heat and oxygen in a case of manufacturing a product using the polypropylene resin composition, the neutralizing agent can neutralize an acid (specifically hydrogen chloride) that may be generated by a residue (a metal component) of a catalyst that is used for polymerization, and the heat-resistant stabilizer can play a role of preventing molecular weight reduction while a polypropylene molded product is used in a high-temperature environment.

Examples of such an antioxidant include a phosphorus-based antioxidant or a phenol-based antioxidant, examples of the phosphorous-based antioxidant include tris (2,3-di-t-butylphenyl) phosphite, and examples of the phenol-based antioxidant include tetrakis [(3,5-di-ti-butyl-4-hydroxyphenyl)propionate] methane.

In addition, for example, calcium stearate or the like may be used as the neutralizing agent, and for example, distearyl thiodipropionate may be used as the heat-resistant stabilizer.

A molded body can be produced by various molding methods using the polypropylene resin composition according to the present invention, and the shape and size of the molded body can be appropriately determined. Examples of the method of manufacturing such a molded body include injection molding, press molding, vacuum molding, foam molding, extrusion molding, and the like, which are commonly used industrially. In addition, examples thereof also include a molding method or a method of coextrusion molding method, in which the polypropylene resin composition according to the present invention is bonded to the same or different kind of polypropylene resin or another resin depending on the purpose. However, the polypropylene resin composition according to the present invention has an excellent extensional viscosity and thus can be more suitably used for deep-draw compression molding or foamed sheet molding. Examples of products manufactured through the deep-draw compression molding include a cup-shaped container, and examples of products manufactured through the foam molding include a lunch box container, a cup noodle container, and a meat processing tray.

The above-described polypropylene resin composition according to the present invention exhibits melt strength characteristics suitable for compression molding, blowing, or foamed sheet molding, a degree of branching may be 0.5 to 0.8, an extensional viscosity may be 5 × 10⁶ to 10⁹ Pa·s, and a melting strength may be 30 cN or more, where specifically, the degree of branching, the extensional viscosity, and the melting strength are measured according to the following methods, and the degree of branching may be more preferably 0.6 to 0.8, the extensional viscosity is 10⁷ to 5 × 10⁸ Pa·s, and the melting strength may be 35 cN or more.

### [Method for measuring degree of branching]

The degree of branching is calculated as a ratio ([η]_{br}/[η]ₗᵢₙ) of an intrinsic viscosity ([η]ₗᵢₙ) of a linear polymer having the same molecular weight as an intrinsic viscosity ([η]_{br}] of the polypropylene resin composition;

### [Method for measuring extensional viscosity]

the extensional viscosity is measured as a resistance value applied when a specimen having a width of 20 mm, a length of 10 mm, and a thickness of 1 mm is fixed to a test piece holder using an advanced rheometric expansion system (ARES), and then the specimen rotates around an axis at a temperature of 180°C and a speed of 0.1/s using an extensional viscosity fixture (EVF) mode, where a maximum value of tensions that varies according to a rotation distance (elongation rate) of the specimen is defined as the extensional viscosity; and

### [Method for measuring melt strength]

when a molten sample is extruded through a circular die having a diameter of 1 mm at 200°C by using a Rheotens device (Rheotens 97 (GOTTFERT), and a strand generated by the extrusion is located 100 mm (spinline length) below a die outlet and then is wound by a Rheotens wheel of which a winding speed gradually increases with an acceleration of 120 mm/s², a force (cN) applied to the wheel is recorded as a function of a winding speed (mm/s), and a force at a peak before the strand breaks or a force applied during breakage is defined as the melting strength.

Hereinafter, specific examples according to the present invention will be described.

### Examples and Comparative Examples

Raw materials were mixed according to the composition in Table 1 below in a Hansel mixer for 1 minute, subsequently the resultant mixture was extruded with a single screw extruder having a temperature of 180°C to 240°C to prepare a pellet-shaped polypropylene resin composition, and then the irradiation amount of the electron beam shown in Table 1 below was maintained to prepare a polypropylene composition. The electron beam was irradiated under conditions of 10 MeV of beam energy, 0.5 to 3 m/min of line speed, and 4 to 5 m of irradiation distance.

**[Table 1]**

| | | | | | | | | | |
|---|---|---|---|---|---|---|---|---|---|
| Item | Unit | Example 1 | Example 2 | Example 3 | Comparative Example 1 | Comparative Example 2 | Comparative Example 3 | Comparative Example 4 | Comparative Example 5 |
| A1 | Parts by weight | 75 | - | - | - | 75 | - | - | 85 |
| A2 | Parts by weight | 25 | - | - | - | 25 | - | - | 15 |
| A3 | Parts by weight | - | 100 | 100 | 100 | - | - | - | - |
| A4 | Parts by weight | - | - | - | - | - | 100 | - | - |
| A5 | Parts by weight | - | - | - | - | - | - | 100 | - |
| B | Parts by weight | 1 | 1 | 1 | - | 1 | 1.5 | 1.5 | 1 |
| C | kGy | 15 | 15 | 20 | - | 0 | 5 | 5 | 5 |
| D1 | Parts by weight | 0.05 | 0.05 | 0.05 | 0.05 | 0.05 | 0.05 | 0.05 | 0.05 |
| D2 | Parts by weight | 0.1 | 0.1 | 0.1 | 0.1 | 0.1 | 0.1 | 0.1 | 0.1 |
| D3 | Parts by weight | 0.05 | 0.05 | 0.05 | 0.05 | 0.05 | 0.05 | 0.05 | 0.05 |
| Notes of Table 1 | | | | | | | | | |
| * Notes | | | | | | | | | |
| A1: Polypropylene homopolymer (weight average molecular weight: 600,000 g/mol) | | | | | | | | | |
| A2: Polypropylene homopolymer (weight average molecular weight: 110,000 g/mol) | | | | | | | | | |
| A3: Polypropylene homopolymer (weight average molecular weight: 450,000 g/mol) | | | | | | | | | |
| A4: Polypropylene homopolymer (weight average molecular weight: 250,000 g/mol) | | | | | | | | | |
| A5: Polypropylene homopolymer (weight average molecular weight: 280,000 g/mol) | | | | | | | | | |
| B: Crosslinking agent (triallyl isocyanurate (TAIC)) | | | | | | | | | |
| C: Irradiation amount of electron beam | | | | | | | | | |
| D1: Phenol-based antioxidant (tetrakis [ethylene-3-(3,5-di-ty-butyl-4-hydroxyphenyl)propionate] methane, Songnox 1010, SONGWON Industrial Co., Ltd.) | | | | | | | | | |
| D2: Phosphorus-based antioxidant (2,3-di-t-butylphenyl phosphite, Songnox 1680, SONGWON Industrial Co., Ltd.) | | | | | | | | | |
| D3: Neutralizing agent (calcium stearate, SAK-CS-POF, Sun Ace) | | | | | | | | | |

### Test Example

The polypropylene pellets prepared according to Examples and Comparative Examples were subjected to measurements for branching characteristics, molecular weight characteristics, extensional viscosity, and melting strength according to the following methods, and the results are shown in the following Table 2.

### [Measurement method]

### (1) Degree of branching

The degree of branching was calculated as a ratio ([η]_{br}/[η]ₗᵢₙ) of an intrinsic viscosity ([η]ₗᵢₙ) of a linear polymer having the same molecular weight as an intrinsic viscosity ([η]_{br}] of the polypropylene resin composition having a long chain branched structure.

### (2) Molecular weight characteristics

The weight average molecular weight (Mw) and the molecular weight distribution (Mw/Mn) were measured by using gel permeation chromatography (GPC, Agilent). Polystyrene was used as a standard substance under a chloroform solvent.

### (3) Extensional viscosity

The extensional viscosity was measured as a resistance value applied when a specimen having a width of 20 mm, a length of 10 mm, and a thickness of 1 mm was fixed to a test piece holder using an advanced rheometric expansion system (ARES), and then the specimen rotated around an axis at a temperature of 180°C and a speed of 0.1/s using an extensional viscosity fixture (EVF) mode, where a maximum value of tensions that varied according to a rotation distance (elongation rate) of the specimen was defined as the extensional viscosity.

### (4) Melt strength

When a molten sample was extruded through a circular die having a diameter of 1 mm at 200°C by using a Rheotens device (Rheotens 97 (GOTTFERT), and a strand generated by the extrusion was located 100 mm (spinline length) below a die outlet and then was wound by a Rheotens wheel of which a winding speed gradually increased with an acceleration of 120 mm/s², a force (cN) applied to the wheel was recorded as a function of a winding speed (mm/s), and a force at a peak before the strand broke or a force applied during breakage was defined as the melting strength.

**[Table 2]**

| Item | Unit | Example 1 | Example 2 | Example 3 | Comparati ve Example 1 | Comparati ve Example 2 | Comparati ve Example 3 | Comparati ve Example 4 | Comparati ve Example 5 |
|---|---|---|---|---|---|---|---|---|---|
| Weight average molecular weight | g/mol | 412, 000 | 287, 000 | 327,000 | 445, 089 | 417, 000 | 235,000 | 280,000 | 367,000 |
| Molecular weight distribut ion | - | 6.0 | 8.2 | 11.2 | 5.4 | 5.98 | 7.7 | 5.2 | 5.2 |
| Content having molecular weight of one million or more | % by weight | 9.9 | 5.7 | 7.6 | 10.7 | 10.11 | 6.0 | 3.4 | 7.8 |
| Degree of branching | - | 0.66 | 0.75 | 0.63 | 1 | 1 | 0.78 | 0.75 | 0.87 |
| Extension al viscosity | Pa·s | 3.1×10⁷ | 1.0×10⁷ | 1.0×10⁸ | 1.0×10⁵ | 1.3×10⁵ | 1.5×10⁶ | 3.7×10⁵ | 1.2×10⁶ |
| Melt strength | cN | 40 | 43 | 41 | 12 | 10 | 22 | 27 | 26 |

With reference to Table 2, it can be confirmed that in a case where a resin composition in which a crosslinking agent is added to polypropylene according to the present invention is irradiated with an electron beam, thereby being allowed to have a certain level of weight average molecular weight, molecular weight distribution, and high molecular weight content (Examples 1 to 3), branches are generated at the same time as the generation of radicals due to the crosslinking agent despite the electron beam irradiation of a low dose, which makes the branching characteristics excellent and makes the extensional viscosity and the melting strength very excellent.

On the contrary, it can be confirmed that in a case where an electron beam is not irradiated (Comparative Examples 1 and 2), in a case where the polypropylene resin composition is out of a certain molecular weight range after irradiation although having been subjected to irradiation with an electron beam (Comparative Example 3), or in a case where the high molecular weight content is insufficient (Comparative Example 4), the extensional viscosity and the melting strength are markedly reduced in a case where the molecular weight distribution is out of a certain range (Comparative Example 5).

As described above, the preferred exemplary embodiments according to the present invention were described in detail. The explanatory description of the present invention has been made exemplarily, and thus those skilled in the art to which the present invention belongs shall be able to understand that the present invention can be easily modified in other specific forms without changing the technical ideas or essential features.

Therefore, the scope of the present invention is represented by the patent claims described below rather than the above-described detailed description, and all changes or modifications derived from the meaning and the scope of the patent claims and the concept equivalent thereto should be construed as being included in the scope of the present invention.

## Claims

1. A polypropylene resin composition, the composition having a weight average molecular weight of 250,000 to 500,000 g/mol, molecular weight distribution (MWD, Mw/Mn) of 5.5 to 12, and a content of a polymer having a molecular weight of 1,000,000 g/mol or more of 4 to 15% by weight.

2. The polypropylene resin composition of claim 1, wherein in the polypropylene resin composition, a degree of branching is 0.5 to 0.8, an extensional viscosity is 5 × 10⁶ to 10⁹ Pa·s, and a melting strength is 30 cN or more, where the degree of branching, the extensional viscosity, and the melting strength are measured according to the following methods,
[Method for measuring degree of branching]
the degree of branching is calculated as a ratio ([η]_{br}/[η]ₗᵢₙ) of an intrinsic viscosity ([η]ₗᵢₙ) of a linear polymer having the same molecular weight as an intrinsic viscosity ([η]_{br}] of the polypropylene resin composition;
[Method for measuring extensional viscosity]
the extensional viscosity is measured as a resistance value applied when a specimen having a width of 20 mm, a length of 10 mm, and a thickness of 1 mm is fixed to a test piece holder using an advanced rheometric expansion system (ARES), and then the specimen rotates around an axis at a temperature of 180°C and a speed of 0.1/s using an extensional viscosity fixture (EVF) mode, where a maximum value of tensions that varies according to a rotation distance (elongation rate) of the specimen is defined as the extensional viscosity; and
[Method for measuring melt strength]
when a molten sample is extruded through a circular die having a diameter of 1 mm at 200°C by using a Rheotens device (Rheotens 97 (GOTTFERT), and a strand generated by the extrusion is located 100 mm (spinline length) below a die outlet and then is wound by a Rheotens wheel of which a winding speed gradually increases with an acceleration of 120 mm/s², a force (cN) applied to the wheel is recorded as a function of a winding speed (mm/s), and a force at a peak before the strand breaks or a force applied during breakage is defined as the melting strength.

3. The polypropylene resin composition of claim 1, wherein the polypropylene resin composition is for compression molding, for blowing, or for foaming.

4. A method for preparing the polypropylene resin composition according to claim 1 by irradiating an electron beam to a resin composition to which 0.01 to 2 parts by weight of a crosslinking agent is added with respect to 100 parts by weight of polypropylene.

5. The method of claim 4, wherein the crosslinking agent is one or more selected from the group consisting of triallyl isocyanurate, triallyl cyanurate, trimethylolpropane trimethacrylate, trimethylolpropane triacrylate, triallyl trimethacrylate, triallyl phosphate, pentaerythritol triacrylate and divinylbenzene.

6. The method of claim 1, wherein an irradiation dose of the electron beam is 5 to 30 kGy.
